(19) **Europäisches Patentamt / European Patent Office / Office européen des brevets**

(11) **EP 4 715 928 A1**

(12) **EUROPEAN PATENT APPLICATION**
published in accordance with Art. 153(4) EPC

(43) Date of publication:
25.03.2026 Bulletin 2026/13

(21) Application number: 24807144.1

(22) Date of filing: 10.05.2024

(51) International Patent Classification (IPC):
$H01M\ 10/0562^{(2010.01)}$    $H01M\ 10/052^{(2010.01)}$
$H01M\ 10/0565^{(2010.01)}$    $H01M\ 50/44^{(2021.01)}$
$H01M\ 50/434^{(2021.01)}$    $H01M\ 50/451^{(2021.01)}$
$H01M\ 50/454^{(2021.01)}$    $H01M\ 50/457^{(2021.01)}$

(52) Cooperative Patent Classification (CPC):
Y02E 60/10

(86) International application number:
PCT/JP2024/017382

(87) International publication number:
WO 2024/237192 (21.11.2024 Gazette 2024/47)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 15.05.2023 JP 2023079919

(71) Applicant: Nippon Kodoshi Corporation
Kochi-shi, Kochi 781-0395 (JP)

(72) Inventors:
• **OGAWA, Kentaro**
**Kochi-shi, Kochi 781-0395 (JP)**
• **MORIMOTO, Kenta**
**Kochi-shi, Kochi 781-0395 (JP)**
• **KUROIWA, Masahiro**
**Kochi-shi, Kochi 781-0395 (JP)**

(74) Representative: **Betten & Resch**
**Patent- und Rechtsanwälte PartGmbB**
**Maximiliansplatz 14**
**80333 München (DE)**

(54) **SECONDARY BATTERY SUPPORT, SOLID ELECTROLYTE SHEET, AND SECONDARY BATTERY**

(57)     The present invention provides a secondary battery support that employs a configuration where a plurality of layers formed including at least one type selected from paper and a non-woven fabric are laminated and integrated, and can reduce an internal resistance of a solid electrolyte layer.

EP 4 715 928 A1

**Description**

Technical Field

The present invention relates to a secondary battery support that retains a solid electrolyte, a solid electrolyte sheet, and a secondary battery that includes this support.

Background Art

As a secondary battery having a high energy density, a lithium ion secondary battery that uses a liquid electrolyte (hereinafter, an electrolytic solution) is used. A lithium ion secondary battery that uses an electrolytic solution employs a configuration where a separator is interposed between a positive electrode and a negative electrode, and the separator retains the electrolytic solution.

For a lithium ion secondary battery, an organic electrolytic solution is mainly used as an electrolytic solution. The organic electrolytic solution is a liquid, and therefore liquid leakage and problems caused by flammability are concerned. Therefore, secondary batteries (hereinafter, all-solid-state batteries) that use solid electrolytes instead of electrolytic solutions have been developed to enhance safety of lithium ion secondary batteries. Since the electrolyte of the all-solid-state battery is a solid, and the all-solid-state battery causes no liquid leakage and has flame retardancy and high heat resistance compared to an electrolytic solution, the all-solid-state battery has attracted attention as a secondary battery having excellent safety. Since the all-solid-state battery has high safety, small all-solid-state batteries for wearable devices or the like that directly touch skins are mass-produced.

Unlike a secondary battery that uses an electrolytic solution between a positive electrode and a negative electrode, not a separator that retains the electrolytic solution, but a solid electrolyte layer is interposed therebetween in the all-solid-state battery. In a case of, for example, a lithium ion all-solid-state battery, lithium ions reach a negative electrode from a positive electrode through a solid electrolyte layer during charging.

On the other hand, lithium ions reach the positive electrode from the negative electrode through the solid electrolyte layer during discharging. As described above, in the case of an all-solid-state battery, various ion species such as sodium ions have been studied in addition to lithium ions as ion (hereinafter, carrier ion) species that conduct between a positive electrode and a negative electrode from a viewpoint of avoiding a problem of stable supply of resources, for example. Since these carrier ions move back and forth between the positive electrode and the negative electrode through the solid electrolyte layer, it is necessary to form pass lines of the carrier ions in a thickness direction of the solid electrolyte layer.

Furthermore, to improve productivity at a time of mass production of all-solid-state batteries, it is desired that the solid electrolyte is formed in a sheet shape and can be manufactured by roll-to-roll similarly to a conventional process of manufacturing lithium ion secondary batteries. However, it is difficult to form a self-standing solid electrolyte sheet having a small thickness and high ionic conductivity using only the solid electrolyte and a binder. Hence, there has been studied a method for forming a solid electrolyte sheet that can stand by itself by retaining a solid electrolyte in a sheet (hereinafter, the support) such as paper or a non-woven fabric.

There is disclosed a technique related to a solid electrolyte sheet that uses, for example, a support whose porosity is 60% or more and 95% or less and whose thickness is 5 $\mu$m or more and less than 20 $\mu$m (see, for example, Patent Literature 1). It is disclosed that this solid electrolyte sheet has self-standing capability even though this solid electrolyte has the small thickness.

Furthermore, there is disclosed a technique related to a solid electrolyte sheet that is formed by performing etching treatment on a film that becomes a support, and includes a plurality of through-holes (see, for example, Patent Literature 2). According to this technique, the through-holes formed by the etching treatment are filled with a solid electrolyte to form an all-solid-state battery that has an excellent energy density and output characteristics.

Citation List

Patent Literature

Patent Literature 1: JP 2020-77488 A
Patent Literature 2: JP 2017-103146 A

Summary of Invention

Technical Problem

However, there are a plurality of portions at which fibers closely adhere to each other and thereby the fibers overlap each other inside the conventional support. As a result, even when a solid electrolyte slurry is coated on the support, the solid electrolyte slurry does not permeate the portions at which the fibers overlap each other, and there are portions at which the solid electrolyte is not filled inside the support.

According to, for example, the technique described in Patent Literature 1, although the support is a support having sufficient voids, there are portions at which fibers closely adhere to each other and overlap each other. Hence, pass lines of carrier ions in the thickness direction inside the solid electrolyte sheet are insufficiently formed, and the solid electrolyte sheet having a high internal resistance is obtained.

Furthermore, according to the technique described in Patent Literature 2, the through-holes are formed by etching, and therefore the through-holes are uniformly dispersed and a film portion that is an insulation object remains at portions other than the through-holes. Therefore, there may be portions at which there is no solid electrolyte in the solid electrolyte sheet. Furthermore, portions at which ions can be conducted in the solid electrolyte sheet are limited, and the solid electrolyte sheet having a high internal resistance is obtained. As a result, the resistance of the all-solid-state battery that uses this support becomes high.

To solve the above-described problem, the present invention provides a secondary battery support that can reduce an internal resistance of a solid electrolyte layer, a solid electrolyte sheet that uses this support, and a secondary battery that uses this solid electrolyte sheet.

Solution to Problem

A secondary battery support according to the present invention is a support for retaining a solid electrolyte of a secondary battery, and includes a multilayer formed by laminating and integrating at least one type selected from paper and a non-woven fabric.

Furthermore, a solid electrolyte sheet according to the present invention includes a support including a multilayer formed by laminating and integrating at least one type selected from paper and a non-woven fabric, and a solid electrolyte retained by the support.

Furthermore, a secondary battery according to the present invention is a secondary battery that includes a positive electrode, a negative electrode, and a solid electrolyte layer disposed between the positive electrode and the negative electrode, and the solid electrolyte layer includes a support including a multilayer formed by laminating and integrating at least one type selected from paper and a non-woven fabric, and a solid electrolyte retained by the support.

Advantageous Effects of Invention

The present invention can provide a secondary battery support that can reduce an internal resistance of a solid electrolyte layer, a solid electrolyte sheet that uses this support, and a secondary battery that uses this solid electrolyte sheet.

Description of Embodiments

Hereinafter, although examples of modes for carrying out the present invention will be described, the present invention is not limited to the following examples.

Note that the description will be given in the following order.

1. Embodiment of Secondary Battery Support (First Embodiment)
2. Embodiment of Secondary Battery (Second Embodiment)

<1. Embodiment of Secondary Battery Support (First Embodiment)>

Hereinafter, the specific embodiment of the secondary battery support will be described.

The secondary battery support (hereinafter, also simply referred to as a support) according to the present embodiment is a support for retaining a solid electrolyte of a secondary battery, and includes a multilayer formed by laminating and integrating at least one type selected from paper and a non-woven fabric.

Note that, in the present disclosure, a numerical range indicated by "to" includes numerical values indicated as an upper limit and a lower limit.

It is requested for a solid electrolyte layer interposed between a positive electrode and a negative electrode that carrier ions conduct between the positive electrode and the negative electrode during charging or discharging. To meet this request, as for carrier ions, pass lines of the carrier ions need to be formed between the positive electrode and the solid electrolyte layer, inside the solid electrolyte layer, and between the solid electrolyte layer and the negative electrode. That is, by forming the uniform pass lines of the carrier ions inside the support, it is possible to reduce a resistance inside the solid electrolyte layer, and, as a result, reduce the resistance of the all-solid-state battery.

The inventors of the present application have found that a dispersion state of fibers constituting a conventional support has had an influence as one factor that the conventional support has inhibited further reduction of a resistance of a solid electrolyte layer.

The fibers overlap closely adhere to each other in the conventional support, and therefore there have been a plurality of portions at which the fibers overlap and are unevenly dispersed. Therefore, when the solid electrolyte is filled in the conventional support, the solid electrolyte cannot be filled at the portions at which the fibers overlap each other, and the solid electrolyte cannot be uniformly filled.

As described above, to uniformly fill the solid electrolyte, it is necessary to improve the dispersion state of the fibers constituting the support. Hence, in the present embodiment, the support has a laminated structure including the multilayer to make a dispersion state of the fibers in the support more uniform than that in the conventional support. The support including the multilayer can make the fibers overlap each other less than those in the support including a single layer. Consequently, it is possible to make the dispersion state of the fibers constituting the support more uniform. As described above, by uniformly dispersing the fibers, it is possible to make a space inside the support uniform, and uniformly fill the solid electrolyte in the entire support. Accordingly, the secondary battery support has the laminated structure including the multilayer, and can be formed as a secondary battery support in which the solid electrolyte inside can be uniformly filled inside.

Even, for example, a support that has the same density and in which the fibers are unevenly dispersed (poor dispersion state) has unevenness in a space inside the support compared to a support in which a dispersion state of fibers is good. This unevenness deteriorates self-standing capability at portions at which the fibers constituting the support do not exist, and produces cracks. Furthermore, the solid electrolyte is hardly filled at portions at which the fibers constituting the support are locally dispersed, the number of pass lines of carrier ions to be formed is smaller, and the resistance becomes higher. Therefore, in a case where a support in which fibers are unevenly dispersed is used, cracks are readily produced, and a solid electrolyte sheet having a high resistance is obtained.

In the support formed by laminating the plurality of layers according to the present embodiment, the constituent fibers are more uniformly dispersed and the space inside the support is uniform, so that it is possible to uniformly fill the solid electrolyte in the entire support. In a solid electrolyte sheet for which this support is used, the number of pass lines of carrier ions to be formed is larger, and a resistance hardly becomes higher. Furthermore, this support includes more fibers that can support the solid electrolyte, which leads to suppression of production of cracks. That is, by using the support including the multilayer, cracks are hardly produced and the resistance of the solid electrolyte sheet becomes low compared to the support including the single layer.

The method for laminating the plurality of layers for the support is not particularly limited as long as the method can laminate each layer without separating each layer independently. For example, papermaking that uses a papermaking method or a method for making each layer and then bonding and laminating layers using a calender machine or a bonding machine can be used. In a case where paper is used for one of the layers, the layers are preferably laminated by papermaking than being bonded in a post-process. Furthermore, in a case of a non-woven fabric for which chemical fibers are used, either a papermaking method or a bonding method may be used. It is important that each layer is not peeled off when a plurality of layers are laminated.

As a combination of constituent materials constituting the support, any constituent material may be used for each layer as long as either paper or a non-woven fabric is used.

Paper refers to paper manufactured by sticking plant fibers or other fibers. Furthermore, the non-woven fabric refers to a sheet-like material formed by performing mechanical treatment, chemical treatment, thermal treatment, or a combination of the mechanical treatment, the chemical treatment and the thermal treatment on various fiber webs such as natural, regenerated, and synthetic fibers without using a weaving machine, and joining constituent fibers to each other by an adhesive or an adhesive force of the fibers themselves.

That is, since paper and a non-woven fabric employ configurations where fibers are randomly arranged, the paper and the non-woven fabric include innumerable voids of various sizes and through-holes of various sizes therein. Consequently, a coated solid electrolyte slurry can spread not only in a thickness direction, but also in a plane direction.

That is, some coated solid electrolytes remain on the surface of the support, some coated solid electrolytes remain inside the support, and some coated solid electrolytes reach a back surface side from a coated surface through the thickness direction of the support.

Hence, in the solid electrolyte sheet made using the support formed by laminating at least one of paper and a non-woven fabric, the solid electrolyte is filled not only on the surface of the support, but also inside the support, and good pass lines of carrier ions are formed in the entire support.

As a result, it is possible to reduce a resistance of the solid electrolyte sheet, and reduce an interface resistance between the solid electrolyte sheet, and the positive electrode and the negative electrode. As a result, it is possible to reduce a resistance of the all-solid-state battery.

The number of laminated layers of the support is not particularly limited. The number of laminated layers can be appropriately changed according to the thickness of the support.

In consideration of the thickness of the solid electrolyte sheet, the number of laminated layers of the support is preferably a two-layer or three-layer structure. In a case of a four or more-layer structure, since the thickness of the support tends to become large, the thickness of the solid electrolyte sheet to be inevitably obtained also becomes large, and therefore a resistance of a battery also tends to become high and thus attention is necessary.

The density of each layer of the support is not particularly limited, yet is preferably in a range of 0.15 to 0.8 g/cm$^3$.

When the density of each layer exceeds 0.8 g/cm$^3$, the density of the support tends to become high, and the number of fibers inside the support becomes large, and therefore the solid electrolyte is hardly filled. Hence, pass lines of carrier ions are hardly formed inside the solid electrolyte sheet to be obtained.

On the other hand, when the density of each layer is lower than 0.15 g/cm$^3$, the solid electrolyte is readily bled-through, and the solid electrolyte that can be retained by the support decreases. As a result, the number of the pass lines of carrier ions inside the solid electrolyte sheet also becomes small, and an internal resistance of the solid electrolyte sheet tends to become high.

Accordingly, by setting the density of each layer to 0.15 g to 0.8 g/cm$^3$, it is easy to form pass lines of carrier ions inside the solid electrolyte sheet, and it is possible to reduce the internal resistance.

The thickness of the support is not particularly limited, yet is preferably 5 to 100 $\mu$m. In a case where the thickness is less than 5 $\mu$m, the thickness of the solid electrolyte sheet becomes small, and therefore it is difficult to prevent short-circuiting between a positive electrode and a negative electrode. On the other hand, in a case where the thickness exceeds 100 $\mu$m, the solid electrolyte sheet becomes thick, and the resistance of the all-solid-state battery tends to become high.

Furthermore, the thick solid electrolyte layer can be formed on both sides or only one side of the support as needed in terms of design of a battery. In this regard, the solid electrolyte layer that does not include the support and is thick is obtained, and therefore, if the solid electrolyte layer is made too thick, cracks are readily produced.

A material that can be used for the support is not particularly limited as long as the material does not repel the solid electrolyte slurry and is fibers that do not adversely affect the solid electrolyte physically and chemically. Examples of the material include organic fibers such as cellulose fibers, polyamide fibers, polyester fibers, polypropylene fibers, and acrylic fibers, and inorganic fibers such as glass fibers and alumina fibers. Furthermore, one or more types of fibers selected from these fibers can be used. By using these fibers, it is possible to obtain the support having excellent filling capability of the solid electrolyte.

Furthermore, from a viewpoint of form maintenance and mechanical strength of the support, it is desirable that the support contains fibers having an adhesive force. Examples of the fibers having the adhesive force include fibers (hereinafter, fibrillated fibers) having fibrils on fiber surfaces, synthetic resin binders, and the like.

Examples of the fibrillated fibers having physical bonding resulting from fiber entanglement include cellulose fibers, polyamide fibers, and acrylic fibers. Furthermore, fibrillated fibers also has chemical bonding resulting from hydrogen bonding if a hydroxyl group is present like cellulose fibers.

Bonding of any fibers is also preferable because the bonded fibers contribute to exhibition of form maintenance and mechanical strength of the support.

Examples of the synthetic resin binder fibers include fibers that maintain a fiber state in a state where a support is formed, and fibers that do not maintain a fiber state and are formed in, for example, a film shape. Binder fibers that maintain a fiber state in a state where a support is formed are preferable in terms of that the binder fibers hardly inhibit permeability and transmittivity and can improve mechanical strength of the support.

The binder fibers that maintain a fiber shape in a state where the support is formed exhibits an adhesive force by thermally bonding fiber entanglement points. Consequently, the binder fibers that maintain the fiber state as the constituent material of the support can reduce breakage and the like due to a physical impact, and adhere only at fiber contact points, so that the binder fibers hardly inhibit permeation and transmission of the solid electrolyte slurry into the support when the solid electrolyte layer is formed.

On the other hand, a resin of the binder fibers that cannot maintain the fiber state in a state where the support is formed is melted by applying heat at the vicinity of a melting point or a softening point of the resin constituting the fibers in a support manufacturing process, and fiber gaps are fused in a film shape. That is, when a binder that cannot maintain a fiber state is used in the state where the support is formed, the binder component forms a film layer in fiber gaps of the support and fills a space to exhibit a binder function. As a result, permeation and transmission of the solid electrolyte into the support may be inhibited.

The material that can be used for the binder fibers that have an adhesive force and maintain a fiber shape is not particularly limited as long as the material does not repel the solid electrolyte slurry and does not adversely affect the solid electrolyte physically and chemically. Examples of the fibers include fibrillated fibers such as beaten cellulose fibers, beaten polyamide fibers, and beaten acrylic fibers, polyamide binder fibers, polyester binder fibers, polyethylene binder fibers, and polypropylene-polyethylene core-sheath type binder fibers. Furthermore, one or more types of fibers selected from these fibers can be used. Furthermore, even in a case where the fibrillated fibers are used, the degree of fibrillation may be adjusted such that the density of the support constituting each layer is in the range of 0.15 to 0.8 g/cm$^3$.

Although the method for manufacturing the support is not particularly limited, and the support can be manufactured by a dry method or a wet method, a papermaking method of depositing, on wires, fibers dispersed in water, and dehydrating and drying the fibers to make a paper is preferable from a viewpoint of uniformity of the texture of the support and the like. A papermaking format of the support is not particularly limited, and papermaking formats such as Fourdrinier papermaking, tanmo papermaking, and cylinder papermaking can be adopted. Furthermore, at a time of papermaking, additives such as a dispersant, an antifoaming agent, and a paper strength enhancer may be added, and post-treatment such as paper strength enhancement treatment, lyophilic treatment, calender treatment, thermal calender treatment, and emboss treatment may be performed after paper layer formation.

Furthermore, the method for laminating a plurality of layers for the support include a method for laminating a plurality of layers for the support formed by the above papermaking method by post-treatment such as calender treatment or thermal calender treatment. Furthermore, the support may be laminated by performing papermaking by a combination of a plurality of papermaking formats such as Fourdrinier papermaking, tanmo papermaking, and cylinder papermaking.

<2. Embodiment of Secondary Battery (Second Embodiment)>

Next, the embodiment of the secondary battery that uses the above-described support will be described. The secondary battery is, for example, an all-solid-state battery including a positive electrode, a negative electrode, and a solid electrolyte layer. In this case, the solid electrolyte layer is disposed so as to be interposed between the positive electrode and the negative electrode. The solid electrolyte layer is configured as a solid electrolyte sheet in which a solid electrolyte is retained by the support. The solid electrolyte sheet includes the secondary battery support and the solid electrolyte, and employs a configuration where the solid electrolyte is retained by the support and the solid electrolyte and the support are integrated.

Types of the positive electrode and the negative electrode used for the all-solid-state battery are not particularly limited. For example, the all-solid-state battery may include a known positive electrode and negative electrode, yet is not limited thereto.

Furthermore, the type of the all-solid-state battery is not particularly limited, and the all-solid-state battery can be formed as, for example, a lithium ion secondary battery, a sodium ion secondary battery, or the like depending on selection of a material constituting the all-solid-state battery.

The above all-solid-state battery can be used as, for example, a storage battery of a mobile communication device, a portable electronic device, an electric bicycle, an electric motorcycle, an electric vehicle, a small household electric power storage device, or the like.

[Positive Electrode and Negative Electrode]

A positive electrode active material used for the positive electrode and a negative electrode active material used for the negative electrode are not particularly limited for the secondary battery, and only need to function as a positive electrode and a negative electrode of the all-solid-state battery matching various carrier ions.

The positive electrode is formed to include a positive electrode active material and a positive electrode current collector. For example, when the all-solid-state battery is a lithium ion secondary battery, the positive electrode needs to be made of a material that can occlude and release lithium ions.

As the positive electrode current collector, for example, aluminum or the like can be used.

Examples of the positive electrode active material include titanium sulfide ($TiS_2$), molybdenum sulfide ($MoS_2$), iron sulfide ($FeS$ or $FeS_2$), copper sulfide ($CuS$), and nickel sulfide ($Ni_3S_2$) as sulfide-based materials. Furthermore, examples of the positive electrode active material include bismuth oxide ($Bi_2O_3$), bismuth lead oxide ($Bi_2Pb_2O_5$), copper oxide ($CuO$), vanadium oxide ($V_6O_{13}$), lithium cobalt oxide ($LiCoO_2$), lithium nickel oxide ($LiNiO_2$), lithium manganese oxide ($LiMnO_2$), $Li(NiCoMn)O_2$, $Li(NiCoAl)O_2$, and $Li(NiCo)O_2$ as oxide-based materials. Furthermore, it is also possible to mix and use these oxide-based materials.

Furthermore, the negative electrode is formed to include a negative electrode active material and a negative electrode current collector. In a case where, for example, the all-solid-state battery is a lithium ion secondary battery, a substance that can occlude and release metal lithium, metal indium, or lithium ions can be used as the negative electrode active material.

As the negative electrode current collector, for example, copper or the like can be used.

Examples of the negative electrode active material include carbon materials, more specifically, synthetic graphite, graphite carbon fibers, resin fired carbon, thermal cracking vapor grown carbon, coke, MesoCarbon MicroBeads (MCMB), furfuryl alcohol resin fired carbon, polyacene, pitch-based carbon fibers, vapor grown carbon fibers, natural graphite, non-graphitizable carbon, and the like. Alternatively, the negative electrode active material may be a mixture of these materials. Furthermore, the examples of the negative electrode active material include metal itself such as metal lithium, metal indium, metal aluminum, or metal silicon, or an alloy obtained by combining these metals with another element or compound.

As the positive electrode and the negative electrode constituting the all-solid-state battery, two types of materials are selected from materials that can constitute the electrode, charge and discharge potentials of the two types of compounds are compared, and an electrode showing a noble potential is used as the positive electrode, and an electrode showing a lower potential is used as the negative electrode to constitute an arbitrary battery.

[Solid Electrolyte Layer]

In the all-solid-state battery, the solid electrolyte layer is configured as the solid electrolyte sheet in which the solid electrolyte is retained by the support. The type of the solid electrolyte constituting the solid electrolyte sheet is not particularly limited, and, for example, a known material that can be used as the solid electrolyte of the all-solid-state battery can be used.

Furthermore, the solid electrolyte is not particularly limited, and any material can be used as long as the material can conduct carrier ions between the positive electrode and the negative electrode. Examples of the solid electrolyte include sulfide-based solid electrolytes, oxide-based solid electrolytes, and the like. Furthermore, other components such as a binder may be added as needed.

Examples of the sulfide-based solid electrolytes that can conduct lithium ions include sulfide-based amorphous solid electrolytes and sulfide-based crystalline solid electrolytes. Specific examples of the sulfide-based amorphous solid electrolytes include $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, $Li_2S$-$P_2S_5$-$LiI$, $Li_2S$-$P_2S_5$-$P_2O_5$-$LiI$, $Li_2S$-$B_2S_3$-$LiI$, $Li_2S$-$P_2S_5$-$Li_2O$-$LiI$, $Li_2S$-$SiS_2$-$B_2S_3$-$LiI$, and the like.

Note that the sulfide-based amorphous solid electrolytes may contain other elements.

Furthermore, although specific examples of the sulfide-based crystalline solid electrolytes include $Li_{3.25}Ge_{0.25}P_{0.75}S_4$, $Li_{10}GeP_2S_{12}$, $Li_6PS_5Cl$, and the like, the sulfide-based crystalline solid electrolytes are not limited to these element compositions.

The solid electrolyte may be other than the sulfide-based solid electrolytes and the oxide-based solid electrolytes, and, as other examples, semi-solid polymer electrolytes such as polyethylene oxide, polypropylene oxide, polyvinylidene fluoride, or polyacrylonitrile containing carrier ions are also exemplified. The solid electrolyte may be a so-called gel type electrolyte in which an electrolytic solution is retained in a polymer solid electrolyte such as a polyethylene oxide-based polymer or a polymer containing at least one type selected from a polyorganosiloxane chain and a polyoxyalkylene chain.

[Method for Manufacturing Solid Electrolyte Sheet]

A method for manufacturing the solid electrolyte sheet is not particularly limited, and a normal method in the technical field of the present invention can be applied.

Examples of the method include a method for preparing a slurry in which a solid electrolyte has been dispersed in a solvent, coating the prepared slurry on a support, and drying the slurry. The solvent used for preparing the slurry of the solid electrolyte is not particularly limited as long as the solvent does not adversely affect capability of the solid electrolyte. Examples of the solvent include non-aqueous solvents.

Although a coating method for coating the slurry including the solid electrolyte on both surfaces or one surface of the support is not particularly limited, examples of the coating method include slide die coating, comma die coating, comma reverse coating, gravure coating, gravure reverse coating, and the like.

Drying performed after coating of the slurry including the solid electrolyte can be performed by, for example, a drying device that uses hot air, a heater, a high frequency, or the like.

Note that the solid electrolyte sheet may be a dried sheet itself, or can be also further pressurized to increase the mechanical strength and the density. Examples of a pressurization method include sheet pressing, roll pressing, and the like.

[Method for Manufacturing All-Solid-State Battery]

The all-solid-state battery can be manufactured by disposing a solid electrolyte layer including a solid electrolyte sheet between the above-described positive electrode and negative electrode, and sticking and bonding the positive electrode and the negative electrode together. A bonding method is not particularly limited, and examples of the bonding method include a method for laminating, pressurizing and pressure-bonding a solid electrolyte sheet, a positive electrode, and a negative electrode, and a method for feeding, continuously pressurizing, and pressure-bonding each member wound in a roll shape to manufacture (roll-to-roll).

Note that, for the purpose of improving adhesion between the solid electrolyte sheet and the positive electrode or the negative electrode, an active material that has ion conductivity or an adhesive material that does not inhibit ion conductivity may be disposed at a bonding interface.

Examples

Hereinafter, specific examples and the like of the support according to the embodiment of the present invention will be described.

First, supports according to Example 1 to Example 8, Conventional Example 1 and Conventional Example 2, and Reference Example were made by the following methods. Note that the supports were made as paper or a wet non-woven fabric using a papermaking method except for Conventional Example 2. Furthermore, in following Examples, for convenience of description, in a case of two layers, one layer is described as a layer A and the other layer is described as a layer B, and, in a case of three layers, an intermediate layer is described as a layer B and outer layers are described as a layer A and a layer C.

[Example 1]

The layer A for which a raw material of 100 mass% of cellulose fibers was used, and that had the thickness of 2 $\mu$m, the basis weight of 1.6 g/m$^2$, and the density of 0.80 g/cm$^3$, and the layer B for which a raw material of 100 mass% of cellulose fibers was used, and that had the thickness of 3 $\mu$m, the basis weight of 2.4 g/m$^2$, and the density of 0.80 g/cm$^3$ were made as paper by papermaking by a cylinder-cylinder multifunction machine to obtain the support having the thickness of 5 $\mu$m, the basis weight of 4.0 g/m$^2$, and the density of 0.80 g/cm$^3$.

[Example 2]

The layer A for which a raw material obtained by mixing 50 mass% of polyester fibers and 50 mass% of polyester binder fibers was used, and that had the thickness of 15 $\mu$m, the basis weight of 6.0 g/m$^2$, and the density of 0.40 g/cm$^3$, and the layer B for which a raw material obtained by mixing 50 mass% of polyester fibers and 50 mass% of polyester binder fibers was used, and that had the thickness of 12 $\mu$m, the basis weight of 4.0 g/m$^2$, and the density of 0.33 g/cm$^3$ were made as paper by papermaking by a tanmo-cylinder multifunction machine to obtain the support having the thickness of 27 $\mu$m, the basis weight of 10.0 g/m$^2$, and the density of 0.37 g/cm$^3$.

[Example 3]

The layer A for which a raw material of 100 mass% of cellulose fibers was used, and that had the thickness of 30 $\mu$m, the basis weight of 6.0 g/m$^2$, and the density of 0.20 g/cm$^3$ was made as paper by a Fourdrinier paper machine, and the layer B for which a raw material obtained by mixing 50 mass% of polyester fibers and 50 mass% of polyester binder fibers was used, and that had the thickness of 30 $\mu$m, the basis weight of 6.0 g/m$^2$, and the density of 0.20 g/cm$^3$ was made as paper by a cylinder paper machine. Next, the layer A and the layer B were moistened and subjected to thermal calender treatment, and thereby laminated and integrated to obtain the support having the thickness of 60 $\mu$m, the basis weight of 12.0 g/m$^2$, and the density of 0.20 g/cm$^3$.

[Example 4]

The layer A for which a raw material obtained by mixing 50 mass% of polyester fibers and 50 mass% of polyester binder fibers was used, and that had the thickness of 30 $\mu$m, the basis weight of 5.0 g/m$^2$, and the density of 0.17 g/cm$^3$, the layer B for which a raw material of 100 mass% of cellulose fibers was used, and that had the thickness of 40 $\mu$m, the basis weight of 6.0 g/m$^2$, and the density of 0.15 g/cm$^3$, and the layer C for which a raw material obtained by mixing 50 mass% of polyester fibers and 50 mass% of polyester binder fibers was used, and that had the thickness of 30 $\mu$m, the basis weight of 5.0 g/m$^2$, and the density of 0.17 g/cm$^3$ were made as paper by papermaking by a cylinder-tanmo-cylinder multifunction machine to obtain the support having the thickness of 100 $\mu$m, the basis weight of 16.0 g/m$^2$, and the density of 0.16 g/cm$^3$.

[Example 5]

The layer A for which a raw material obtained by mixing 50 mass% of polyester fibers and 50 mass% of polyester binder fibers was used, and that had the thickness of 20 $\mu$m, the basis weight of 2.5 g/m$^2$, and the density of 0.13 g/cm$^3$, and the layer B for which a raw material obtained by mixing 50 mass% of polyester fibers and 50 mass% of polyester binder fibers was used, and that had the thickness of 15 $\mu$m, the basis weight of 5.0 g/m$^2$, and the density of 0.33 g/cm$^3$ were made as paper by papermaking by a tanmo-cylinder multifunction machine to obtain the support having the thickness of 35 $\mu$m, the basis weight of 7.5 g/m$^2$, and the density of 0.21 g/cm$^3$.

[Example 6]

The layer A for which a raw material of 100 mass% of cellulose fibers was used, and that had the thickness of 30 $\mu$m, the basis weight of 25.0 g/m$^2$, and the density of 0.83 g/cm$^3$, and the layer B for which a raw material obtained by mixing 50 mass% of polyester fibers and 50 mass% of polyester binder fibers, and that had the thickness of 17 $\mu$m, the basis weight of 8.0 g/m$^2$, and the density of 0.47 g/cm$^3$ were made as paper by papermaking by a Fourdrinier-cylinder multifunction machine to obtain the support having the thickness of 47 $\mu$m, the basis weight of 33.0 g/m$^2$, and the density of 0.70 g/cm$^3$.

[Example 7]

The layer A for which a raw material of 100 mass% of cellulose fibers was used, and that had the thickness of 2 $\mu$m, the basis weight of 0.9 g/m$^2$, and the density of 0.45 g/cm$^3$, and the layer B for which a raw material of 100 mass% of cellulose fibers was used, and that had the thickness of 2 $\mu$m, the basis weight of 1.0 g/m$^2$, and the density of 0.50 g/cm$^3$ were made as paper by papermaking by a cylinder-cylinder multifunction machine to obtain the support having the thickness of 4 $\mu$m, the basis weight of 1.9 g/m$^2$, and the density of 0.48 g/cm$^3$.

[Example 8]

The layer A for which a raw material obtained by mixing 50 mass% of polyester fibers and 50 mass% of polyester binder fibers was used, and that had the thickness of 32 $\mu$m, the basis weight of 13.0 g/m$^2$, and the density of 0.41 g/cm$^3$, the layer B for which a raw material of 100 mass% of cellulose fibers was used, and that had the thickness of 40 $\mu$m, the basis weight of 16.0 g/m$^2$, and the density of 0.40 g/cm$^3$, and the layer C for which a raw material obtained by mixing 50 mass% of polyester fibers and 50 mass% of polyester binder fibers was used, and that had the thickness of 32 $\mu$m, the basis weight of 13.0 g/m$^2$, and the density of 0.41 g/cm$^3$ were made as paper by papermaking by a cylinder-tanmo-cylinder multifunction machine to obtain the support having the thickness of 104 $\mu$m, the basis weight of 42.0 g/m$^2$, and the density of 0.40 g/cm$^3$.

[Conventional Example 1]

Referring to the method for manufacturing the support described in Example 1 of Patent Literature 1, cylinder papermaking was performed using a raw material obtained by mixing 15 mass% of polyester fibers and 85 mass% of polyester binder fibers to obtain the support having the thickness of 19 $\mu$m, the basis weight of 3.8 g/m$^2$, and the density of 0.20 g/cm$^3$.

[Conventional Example 2]

A support manufactured by a method similar to the method described in Example 2 of Patent Literature 1 was made to obtain the support according to Conventional Example 2. According to Conventional Example 2, a polyimide film was subjected to etching treatment to form a hole of 200 $\mu$m square, and obtain the support having the thickness of 30 $\mu$m, the basis weight of 8.8 g/m$^2$, and the density of 0.29 g/cm$^3$.

[Reference Example]

Cylinder papermaking was performed using a raw material obtained by mixing 50 mass% of polyester fibers and 50 mass% of polyester binder fibers to obtain the support having the thickness of 60 $\mu$m, the basis weight of 12.0 g/m$^2$, and the density of 0.20 g/cm$^3$.

[Making of All-Solid-State Battery]

Next, all-solid-state batteries were made using the supports according to above Examples, Conventional Examples, and Reference Example. A specific making method is as follows.

(Positive Electrode Structure)

LiNiCoAlO$_2$ ternary powder as a positive electrode active material, Li$_2$S-P$_2$S$_5$ amorphous powder as a sulfide-based solid electrolyte, and carbon fibers as a conductive additive were used and mixed. This mixed powder was mixed with a dehydrated xylene solution in which Styrene Butadiene Rubber (SBR) was dissolved as a binder to make a positive electrode coating liquid. The positive electrode coating liquid was coated on an aluminum foil current collector that is a positive electrode current collector, dried, and further rolled to obtain the positive electrode structure.

(Negative Electrode Structure)

Graphite as a negative electrode active material, Li$_2$S-P$_2$S$_5$ amorphous powder as a sulfide-based solid electrolyte, PolyVinylidene Fluoride (PVdF) as a binder, and N-Methyl-2-Pyrrolidone (NMP) as a solvent were used and mixed to make a negative electrode coating liquid. A negative electrode coating liquid was coated on a copper foil current collector that is a negative electrode current collector, dried, and further rolled to obtain the negative electrode structure.

(Solid Electrolyte Sheet)

Li$_2$S-P$_2$S$_5$ amorphous powder as a sulfide-based solid electrolyte, SBR as a binder, and xylene as a solvent were used and mixed to make a solid electrolyte slurry.
The solid electrolyte slurry was coated on the supports according to above Examples, Conventional Examples, and Reference Example, and dried to obtain the solid electrolyte sheet.

[Manufacturing of All-Solid-State Battery]

A negative electrode structure whose size is 88 mm × 58 mm, a solid electrolyte sheet whose size is 92 mm × 62 mm, and a positive electrode structure whose size is 87 mm × 57 mm were laminated, subjected to dry lamination treatment, and bonded to obtain a single cell of an all-solid-state battery.
The obtained single cell was put in an aluminum laminate film to which a terminal was attached, deaerated, heat-sealed, and packed.

[Method for Measuring Characteristics of Support and All-Solid-State Battery]

The characteristics of the made support and all-solid-state battery were measured under the following conditions and by the following methods.

[Thickness]

Using a method that changed to 1.5 N a measuring force of a micrometer described in "5.1.1 measurement instrument and measurement method a case of using outer micrometer" defined in "JIS C 2300-2 'Cellulosic papers for electrical purposes-Part 2: Methods of test' 5.1 Thickness", and changed the diameter of a pressurized surface to 14.3 mmφ, the thickness of the support was measured by a method for folding paper into 10 sheets in "5.1.3 Case of measuring thickness by folding paper".

[Basis Weight]

The basis weight of the support in a bone dry condition was measured by a method defined in "JIS C 2300-2 'Cellulosic papers for electrical purposes-Part 2: Methods of test' 6 Basis Weight".

[Density]

The density of the support was calculated using the following equation.

$$\texttt{Density (g/cm}^3\texttt{)  =  W/T}$$

W: basis weight (g/m$^2$), T: thickness (μm)

[Porosity]

The porosity of the support was calculated using the following equation. Note that, when a plurality of materials constituting the support were mixed, an average specific gravity of the constituent fibers was obtained by performing calculation in proportion to a mixing ratio, and then was calculated.

$$\text{Porosity (\%)} = (1-(D/S)) \times 100$$

D: support density ($g/cm^3$), S: specific gravity of constituent fiber ($g/cm^3$)

[Tensile Strength]

A maximum tensile load in a longitudinal direction (manufacturing direction) of the support was measured as the tensile strength of the support with a test width of 15 mm by a method defined in "JIS P 8113 'Paper and board-Determination of tensile properties-Part2:Constant rate of elongation method' (ISO1924-2 'Paper and board-Determination of tensile properties-Part2: Constant rate of elongation method').

[Internal Resistance of All-Solid-State Battery]

The all-solid-state battery was charged up to 4.0 V at a current density of 0.1 C under an environment of 25°C, and an impedance in a range of a frequency of 0.1 Hz to 1 MHz was measured using an LCR meter. An arc portion of an obtained Cole-Cole plot was fitted into a semicircular shape whose bottom side is the x axis, and a numerical value of a portion at which the right end of the semicircle and the x axis intersect is a resistance value.

[Discharge Capacity of All-Solid-State Battery]

The all-solid-state battery was charged up to 4.0 V at a current density of 0.1 C under an environment of 25°C, and then discharged up to 2.5 V at a current density of 0.1 C, and the discharge capacity at this time was measured.

Table 1 shows blended fiber names and blending ratios of the supports according to above-described Example 1 to Example 8, Conventional Example 1 and Conventional Example 2, and Reference Example. Furthermore, Table 2 shows evaluation results of the characteristics of the supports according to above-described Examples and Conventional Examples, and the battery characteristics of the all-solid-state batteries.

[Table 1]

| | | Support Configuration | | | | | |
| --- | --- | --- | --- | --- | --- | --- | --- |
| | | Fiber Name | | | Blending Ratio wt% | Blending Ratio wt% | Blending Ratio wt% |
| | | Layer A | Layer B | Layer C | Layer A | Layer B | Layer C |
| | Example 1 | Cellulose | Cellulose | - | 100 | 100 | - |
| | Example 2 | Polyester Polyester Binder | Polyester Polyester Binder | - | 50 50 | 50 50 | - |
| | Example 3 | Cellulose | Polyester Polyester Binder | - | 100 | 50 50 | - |
| | Example 4 | Polyester Polyester Binder | Cellulose | Polyester Polyester Binder | 50 50 | 100 | 50 50 |
| | Example 5 | Polyester Polyester Binder | Polyester Polyester Binder | - | 50 50 | 50 50 | - |

(continued)

| | | Support Configuration | | | | | |
|---|---|---|---|---|---|---|---|
| | | Fiber Name | | | Blending Ratio | Blending Ratio | Blending Ratio |
| | | | | | wt% | wt% | wt% |
| | | Layer A | Layer B | Layer C | Layer A | Layer B | Layer C |
| Example 6 | | Cellulose | Polyester Polyester Binder | - | 100 | 50 50 | - |
| Example 7 | | Cellulose | Cellulose | - | 100 | 100 | - |
| Example 8 | | Polyester Polyester Binder | Cellulose | Polyester Polyester Binder | 50 | 100 | 50 |
| Conventional Example 1 | | Polyester Polyester Binder | - | - | 15 85 | - | - |
| Conventional Example 2 | | Polyimide film is subjected to etching treatment, and hole of 200 $\mu$m square is formed | - | - | - | - | - |
| Reference Example | | Polyester Polyester Binder | - | - | 50 50 | - | - |

[Table 2]

| | | Support Characteristics | | | | | Battery Characteristics | |
|---|---|---|---|---|---|---|---|---|
| | | Thickness | Basis Weight | Density | Porosity | Tensile Strength | Resistance | Discharge Capacity |
| | | $\mu$m | g/m$^2$ | g/cm$^3$ | % | N/15mm | $\Omega\cdot$cm$^2$ | mAh/g |
| Example 1 | A | 2 | 1.6 | 0.80 | 46.7 | - | 714 | 93 |
| | B | 3 | 2.4 | 0.80 | 46.7 | - | | |
| | A + B | 5 | 4.0 | 0.80 | 46.7 | 2.5 | | |
| Example 2 | A | 15 | 6.0 | 0.40 | 71.0 | - | 741 | 84 |
| | B | 12 | 4.0 | 0.33 | 75.8 | - | | |
| | A + B | 27 | 10.0 | 0.37 | 73.2 | 8.5 | | |
| Example 3 | A | 30 | 6.0 | 0.20 | 86.7 | - | 797 | 72 |
| | B | 30 | 6.0 | 0.20 | 85.5 | - | | |
| | A + B | 60 | 12.0 | 0.20 | 86.1 | 5.4 | | |
| Example 4 | A | 30 | 5.0 | 0.17 | 87.9 | - | 810 | 68 |
| | B | 40 | 6.0 | 0.15 | 90.0 | - | | |
| | C | 30 | 5.0 | 0.17 | 87.9 | - | | |
| | A + B + C | 100 | 16.0 | 0.16 | 88.7 | 8.0 | | |

(continued)

| | | Support Characteristics | | | | | Battery Characteristics | |
|---|---|---|---|---|---|---|---|---|
| | | Thickness | Basis Weight | Density | Porosity | Tensile Strength | Resistance | Discharge Capacity |
| | | $\mu$m | g/m$^2$ | g/cm$^3$ | % | N/15mm | $\Omega \cdot$cm$^2$ | mAh/g |
| Example 5 | A | 20 | 2.5 | 0.13 | 90.9 | - | 912 | 59 |
| | B | 15 | 5.0 | 0.33 | 75.8 | - | | |
| | A + B | 35 | 7.5 | 0.21 | 84.5 | 4.9 | | |
| Example 6 | A | 30 | 25.0 | 0.83 | 44.4 | - | 932 | 52 |
| | B | 17 | 8.0 | 0.47 | 65.9 | - | | |
| | A + B | 47 | 33.0 | 0.70 | 51.2 | 25.2 | | |
| Example 7 | A | 2 | 0.9 | 0.45 | 70.0 | - | 728 | 85 |
| | B | 2 | 1.0 | 0.50 | 66.7 | - | | |
| | A + B | 4 | 1.9 | 0.48 | 68.3 | 2.5 | | |
| Example 8 | A | 32 | 13.0 | 0.41 | 70.6 | - | 950 | 79 |
| | B | 40 | 16.0 | 0.40 | 73.3 | - | | |
| | C | 32 | 13.0 | 0.41 | 70.6 | - | | |
| | A + B + C | 104 | 42.0 | 0.40 | 71.6 | 32.3 | | |
| Conventional Example 1 | - | 19 | 3.8 | 0.20 | 85.5 | 2.1 | 1,036 | 49 |
| Conventional Example 2 | - | 30 | 8.8 | 0.29 | 79.5 | 6.1 | 1,499 | 42 |
| Reference Example | - | 60 | 12.0 | 0.20 | 85.5 | 4.8 | 1,277 | 47 |

Hereinafter, the evaluation results of the all-solid-state batteries that used the supports according to of Examples, Conventional Examples, and Reference Example will be described in detail.

As shown in Table 2, the all-solid-state batteries that used the supports according to Examples 1 to 8 have an excellent internal resistance and discharge capacity compared to the all-solid-state batteries that used the supports according to Conventional Examples 1 and 2 and Reference Example. In particular, the all-solid-state batteries that used the supports according to Examples 1 to 4 whose densities of each layer are 0.15 to 0.8 g/cm$^3$ and 0.15 to 0.8 g/cm$^3$ have an excellent internal resistance and discharge capacity compared to the all-solid-state batteries that used the supports according to Examples 5 and 6 whose densities of each layer are out of the above range and the supports according to Examples 7 and 8 whose thicknesses of the supports are out of the above range.

The all-solid-state batteries that used the supports according to Examples 5 and 6 have a higher resistance and a lower discharge capacity than those of the all-solid-state batteries that used the supports according to Examples 1 to 4. It is considered for the support according to Example 5 that the density of the support of the layer A was 0.13 g/cm$^3$ and low, and therefore when the solid electrolyte was coated, the solid electrolyte that can be retained by the layer A decreased. As a result, it is considered that the number of pass lines of carrier ions inside the solid electrolyte sheet decreased, and, as a result, the all-solid-state battery having a high resistance and a low discharge capacity was obtained.

It is considered for the support according to Example 6 that the density of the layer A was 0.83 g/cm$^3$ and high, and therefore it was difficult to fill the solid electrolyte in the layer A. As a result, it is considered that sufficient pass lines of carrier ions were not formed inside the obtained solid electrolyte sheet, and the all-solid-state battery having a high resistance and a low discharge capacity was obtained.

That is, comparison between Examples 1 to 4 and Examples 5 and 6 shows that the density of each layer constituting the support is preferably in the range of 0.15 to 0.80 g/cm$^3$.

Although the all-solid-state battery that used the support according to Example 7 had no problem with discharge characteristics, some batteries short-circuited when discharge tests were conducted. It is considered that the thickness of the support according to Example 7 is 4 $\mu$m and small, and therefore a short distance between the positive electrode and the negative electrode is a factor of short-circuiting.

In a case where the support according to Example 8 was used, a resistance is higher and a discharge capacity is lower than those of the all-solid-state batteries that used the supports according to Examples. The thickness of the support according to Example 8 is 104 $\mu$m and large, and therefore the thickness of the formed solid electrolyte sheet is also large. As a result, it is considered that the resistance of the all-solid-state battery that uses this solid electrolyte sheet became high.

That is, comparison between Examples 1 to 4 and Examples 7 and 8 shows that the thickness of the support is preferably in the range of 5 to 100 $\mu$m.

The all-solid-state battery that used the support according to Conventional Example 1 has a higher resistance and a lower discharge capacity than those of the all-solid-state batteries that used the supports according to Examples 1 to 8. Although the support according to Conventional Example 1 is a support having sufficient voids, there are portions at which fibers closely adhere to each other and overlap each other, and the number of pass lines of carrier ions formed in the thickness direction inside the solid electrolyte sheet becomes smaller. As a result, it is considered that the all-solid-state battery that used the support according to Conventional Example 1 has a higher resistance and a lower discharge capacity than those of the all-solid-state batteries that used the supports according to Examples 1 to 8.

Comparison between each Example and Conventional Example 1 shows that a support formed by laminating and integrating a plurality of layers is suitable to reduce the resistance of the all-solid-state battery.

Unlike the supports according to Examples 1 to 8 that are the paper or the non-woven fabric, the support according to Conventional Example 2 is a support formed by forming through-holes in a film. However, although the solid electrolyte can be filled in the through-holes of the support according to Conventional Example 2, the solid electrolyte can be filled only inside the formed through-holes, and therefore a film portion that is an insulation object remains at portions other than the through-holes, and there are portions that the solid electrolyte does not exist.

As a result, it is considered that the all-solid-state battery that used the support according to Conventional Example 2 had a higher resistance and a lower discharge capacity than those of the all-solid-state batteries that used the supports according to Examples.

Comparison between Examples 1 to 8 and Conventional Example 2 shows that paper and a non-woven fabric are suitable as supports to reduce the resistance of the all-solid-state battery.

The support according to Reference Example has the same density and the same thickness as those of the support according to Example 3, yet has a high resistance and a low discharge capacity. It is considered that, in the support according to Reference Example, the dispersion state of the fibers was poor, there was unevenness in the space inside the support, and cracks were produced. As a result, it is considered that the all-solid-state battery that used the support according to Reference Example had a higher resistance and a lower discharge capacity than those of the all-solid-state batteries that used the supports according to Examples 1 to 8.

The above-described embodiment is merely an example, and, for example, the compositions and the like of the carrier ions, the solid electrolyte, the positive electrode, and the negative electrode can be appropriately changed by those skilled in the art.

Note that the present invention is not limited to the configuration described in the above-described embodiment, and various modifications and alterations can be made without departing from the configuration of the present invention.

## Claims

1. A secondary battery support for retaining a solid electrolyte of a secondary battery, comprising
   a multilayer formed by laminating and integrating at least one type selected from paper and a non-woven fabric.

2. The secondary battery support according to claim 1, wherein the secondary battery support comprises two layers or three layers that are laminated and integrated.

3. The secondary battery support according to claim 1, wherein a density of each layer of the support is 0.15 to 0.8 g/cm$^3$.

4. The secondary battery support according to any one of claims 1 to 3, wherein a thickness of the support is 5 to 100 $\mu$m.

5. A solid electrolyte sheet comprising:

a secondary battery support including a multilayer formed by laminating and integrating at least one type selected from paper and a nonwoven fabric; and
a solid electrolyte retained by the support.

6. A secondary battery that comprises a positive electrode, a negative electrode, and a solid electrolyte layer disposed between the positive electrode and the negative electrode, wherein

the solid electrolyte layer includes
a secondary battery support including a multilayer formed by laminating and integrating at least one type selected from paper and a nonwoven fabric; and
a solid electrolyte retained by the support.

## INTERNATIONAL SEARCH REPORT

| International application No. |
| --- |
| **PCT/JP2024/017382** |

**A. CLASSIFICATION OF SUBJECT MATTER**

*H01M 10/0562*(2010.01)i; *H01M 10/052*(2010.01)i; *H01M 10/0565*(2010.01)i; *H01M 50/44*(2021.01)i;
*H01M 50/434*(2021.01)i; *H01M 50/451*(2021.01)i; *H01M 50/454*(2021.01)i; *H01M 50/457*(2021.01)i
FI: H01M10/0562; H01M10/052; H01M10/0565; H01M50/434; H01M50/44; H01M50/451; H01M50/454; H01M50/457

According to International Patent Classification (IPC) or to both national classification and IPC

**B. FIELDS SEARCHED**

Minimum documentation searched (classification system followed by classification symbols)

H01M10/0562; H01M10/052; H01M10/0565; H01M50/44; H01M50/434; H01M50/451; H01M50/454; H01M50/457

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/220186 A1 (ASAHI KASEI KABUSHIKI KAISHA) 20 October 2022 (2022-10-20) claims, paragraphs [0024], [0041], example 1 | 1-6 |
| X | WO 2021/200621 A1 (MITSUBISHI PAPER MILLS LTD.) 07 October 2021 (2021-10-07) claim 5, paragraphs [0087]-[0088], examples 12-14 | 1-6 |
| A | JP 2021-188184 A (NIPPON SHEET GLASS COMPANY, LIMITED) 13 December 2021 (2021-12-13) | 1-6 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 July 2024** | **23 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

# EP 4 715 928 A1

| INTERNATIONAL SEARCH REPORT | | International application No. |
| Information on patent family members | | **PCT/JP2024/017382** |

| Patent document cited in search report | | Publication date (day/month/year) | Patent family member(s) | Publication date (day/month/year) |
|---|---|---|---|---|
| WO 2022/220186 A1 | | 20 October 2022 | EP 4324971 A1 claims, paragraphs [0027], [0048], example 1 CN 117121126 A KR 10-2023-0147169 A | |
| WO 2021/200621 A1 | | 07 October 2021 | US 2023/0193534 A1 claim 5, paragraphs [0085]-[0086], examples 12-14 EP 4130370 A1 CN 115349194 A | |
| JP 2021-188184 A | | 13 December 2021 | (Family: none) | |

Form PCT/ISA/210 (patent family annex) (July 2022)

17

**EP 4 715 928 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020077488 A
- JP 2017103146 A